# EUROPÄISCHE PATENTSCHRIFT

(11) **EP 1 926 928 B1**
(45) Veröffentlichungstag und Bekanntmachung des Hinweises auf die Patenterteilung: **25.08.2010**
(21) Anmeldenummer: 06805653.0
(22) Anmeldetag: 06.09.2006
(51) Int. Cl.: F16K 31/02

(54) **ANORDNUNG ZUM VERSTELLEN EINES VENTILS**
ARRANGEMENT FOR ADJUSTING A VALVE
ENSEMBLE POUR DEPLACER UNE SOUPAPE

(30) Priorität: 23.09.2005 DE 102005045432
(43) Veröffentlichungstag der Anmeldung: 04.06.2008
(73) Patentinhaber: Möhlenhoff Wärmetechnik GmbH, 38229 Salzgitter (DE)
(72) Erfinder: GEBUREK, Frank, 31162 Bad Salzdethfurt (DE); SEELMANN, Christian, 31174 Schellerten (DE)
(74) Vertreter: Döring, Roger
(86) Internationale Anmeldenummer: PCT/EP2006/008659
(87) Internationale Veröffentlichungsnummer: WO 2007/036285

(56) Entgegenhaltungen:
- JP-A- 2 008 571
- JP-A- 57 025 573
- JP-A- 59 103 088
- JP-A- 61 017 788
- JP-A- 61 229 977
- US-A- 4 156 518

## Beschreibung

Die Erfindung bezieht sich auf eine Anordnung zum Verstellen eines Ventils, und ein Ventil wie sie beispielsweise in der Heizungs- und Lüftungstechnik eingesetzt wird. Sie kann grundsätzlich überall dort verwendet werden, wo durch ein Ventil eine Verstellbewegung durchgeführt werden soll. Es können dadurch beispielsweise Klappen bewegt oder lichte Rohrquerschnitte verändert werden, wodurch auch die Durchflußmenge eines durch ein entsprechendes Rohrsystem strömenden bzw. fließenden Mediums verändert werden kann. Ein solches Medium ist beispielsweise Wasser oder Luft.

Die bekannte Anordnung nach der JP 61229977 A weist ein lineares Stellglied mit einem Stellelement auf, das aus einer Legierung mit eingeprägtem Formgedächtnis besteht. Es ist mit einem zu bewegenden Kolben bestückt und an beiden Enden mit einer Stromquelle verbunden. Das Stellelement kann bei Stromzufuhr durch Erwärmung und anschließende Abkühlung in Achsrichtung des Kolbens verstellt werden. Für die Rückbewegung des Stellelements in seine Ausgangsstellung ist eine Zylinderfeder an demselben angebracht.

Bei der durch die DE 31 40 472 C2 bekannten Anordnung werden der Arbeitskolben eines temperaturabhängigen Dehnkörpers und dadurch auch der Stößel eines Ventils durch die Wirkung von elektrischem Strom bewegt. Ein solcher Dehnkörper besteht aus einem hermetisch dichten metallischen Topf, in dem ein sein Volumen temperaturabhängig änderndes Material angeordnet ist. In dieses Material ragt unter Beibehaltung des hermetisch dichten Verschlusses der Arbeitskolben hinein, der bei Erwärmung aus dem Topf herausgedrückt und bei Abkühlung durch eine Gegenkraft wieder in denselben hinein gedrückt wird. An dem Topf des temperaturabhängigen Dehnkörpers ist bei dieser Anordnung ein elektrischer Widerstand als Heizelement angebracht. Ein beispielsweise von einem Thermostat geliefertes Signal bewirkt, daß der Widerstand mit Strom versorgt wird. Durch die dann erzeugte Wärme wird der Arbeitskolben des Dehnkörpers verstellt. Der Stößel des in Ruhestellung beispielsweise geschlossenen Ventils wird dadurch entlastet und durch eine Rückstellfeder in Richtung "Öffnung des Ventils" bewegt. Entsprechend aufgebaute Anordnungen arbeiten in der Regel zufriedenstellend. Sie haben wegen der relativ großen axialen Länge des Dehnkörpers aber oft störend große Abmessungen. Der Dehnkörper ist außerdem ein aufwendiges und daher teures Bauteil.

Der Erfindung liegt die Aufgabe zugrunde, die Anordnung zum Verstellen eines Ventils so zu gestalten, daß ihre Abmessungen auf einfache Weise vermindert werden können.

Diese Aufgabe wird gemäß den Merkmalen des Patentanspruchs 1 gelöst.

Das bei dieser Anordnung eingesetzte metallische Bauteil besteht aus einer an sich bekannten Formgedächtnislegierung, wie sie beispielsweise aus der DE 198 10 640 C2 bekannt ist. Sie hat beispielsweise die Komponenten Nickel, Titan und Kupfer. Ein Bauteil aus einer solchen Legierung erhält mit einer speziellen Behandlung unterhalb einer kritischen Temperatur mit bleibender Verformung ein Formgedächtnis mit der Maßgabe eingeprägt, daß es nach einer Verformung aus seiner eingeprägten Form heraus in eine andere Form bei Erwärmung in die eingeprägte Form zurückgeht, und zwar mit erheblicher Kraftentwicklung. Dabei können solche Bauteile bei unterschiedlichen Temperaturen reagieren, und zwar in Abhängigkeit von den zu ihrem Aufbau verwendeten Legierungsbestandteilen.

Ein solches Bauteil ist bei dieser Anordnung im Gehäuse derselben so angeordnet, daß sich seine wesentlichen Abmessungen quer zur Bewegungsrichtung des Stößels erstrecken. Es kann dazu beispielsweise als rechteckiger Streifen ausgebildet sein, vergleichbar mit einer Blattfeder. Das Bauteil trägt dadurch nur wenig zur axialen Bauhöhe des Gehäuses und damit der gesamten Anordnung bei. Da der Weg, den das metallische Bauteil zwischen seinen beiden Endstellungen überbrückt, relativ klein ist, wird für den Verstellweg ebenfalls nur wenig Platz benötigt. Die Abmessungen der Anordnung, insbesondere deren Höhe, können gegenüber bekannten Anordnungen daher insgesamt wesentlich reduziert werden. Durch den zwischen Stellelement und Druckeinheit angebrachtem Federteller mit integriertem Heizelement, beispielsweise einem PTC-Widerstand, kann der Energiebedarf zum Betrieb der Anordnung niedrig gehalten werden. Es kann dadurch auch erreicht werden, daß eine Reaktion erst bei einer Temperatur von mehr als 70 °C erfolgt, was wegen der in Heizsystemen herrschenden hohen Temperaturen von Vorteil ist. Die tegierungsmäßige Zusammensetzung des Stellelements ist dabei gemäß der schon erwähnten DE 198 10 640 C2 gegeben.

Ausführungsbeispiele des Erfindungsgegenstandes sind in den Zeichnungen dargestellt.

Es zeigen:
Fig. 1 in schematischer Darstellung eine an einem Ventil befestigte Anordnung nach der Erfindung.
Fig. 2 einen auf einem Ventil montierten Halter.
Fig. 3 und 4 Schnitte durch eine Anordnung nach Fig. 1 in zwei unterschiedlichen Positionen in vergrößerter Darstellung.
Fig. 5 eine gegenüber Fig. 4 abgewandelte Ausführungsform der Anordnung.

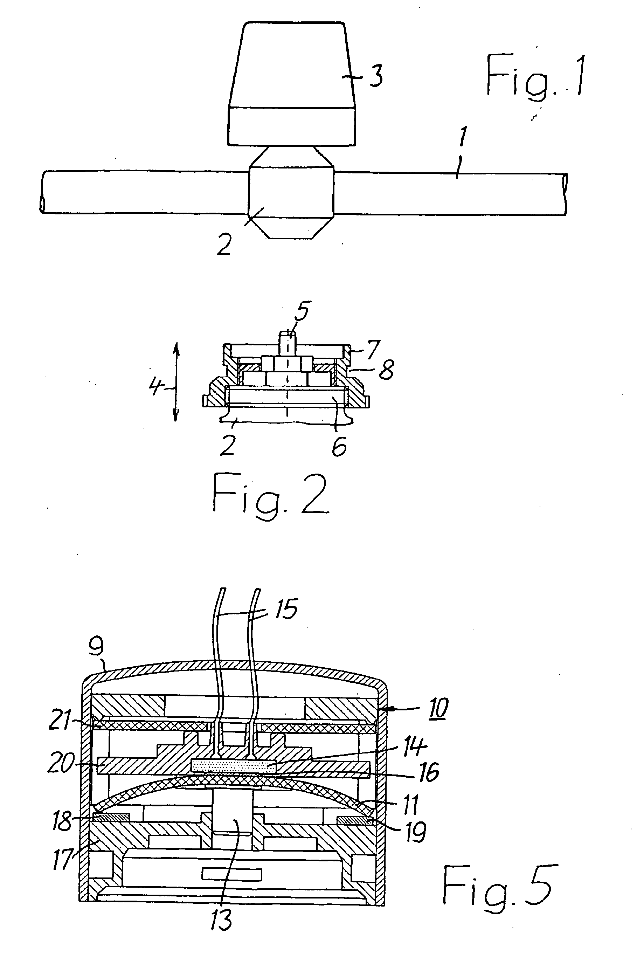

Gemäß Fig. 1 ist in einer Rohrleitung 1, in der beispielsweise Heizungswasser geführt wird, ein Ventil 2 angeordnet. An dem Ventil 2 ist eine Anordnung 3 angebracht, mit der die Stellung des Ventils 2 temperaturabhängig gesteuert werden kann. Das Ventil 2 hat gemäß Fig. 2 einen in Richtung des Doppelpfeils 4 durch eine nicht dargestellte Rückstellfeder beaufschlagten Stößel 5, der zwischen zwei Endstellungen verstellbar ist. Konzentrisch zum Stößel 5 kann ein Gewindestutzen 6 angebracht sein, auf den hier ein aus Kunststoff bestehender Halter 7 aufgeschraubt ist. Er hat an seiner Umfangsfläche eine in bevorzugter Ausführungsform umlaufende, nutförmige Vertiefung 8, in welche in Montageposition einrastende Verriegelungselemente der Anordnung 3 eingreifen können. Die Anordnung 3 kann aber auch auf andere Art und Weise am Ventil 2 befestigt werden.

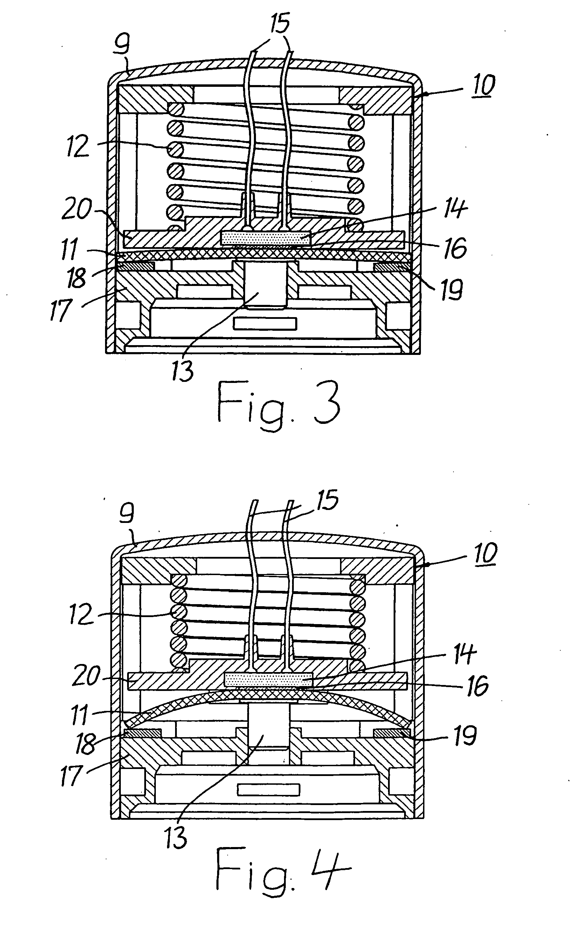

Die Anordnung zum Verstellen des Ventils 2 weist gemäß den Fig. 3 bis 5 ein vorzugsweise aus einem stabilen Kunststoff bestehendes Gehäuse 9 auf, das auf der Ventil 2 wie beschrieben aufgesetzt werden kann. In dem Gehäuse 9 ist ein Einsatz 10 mit einem metallischen Bauteil 11 als Stellelement und einer Druckfeder 12 als Druckeinheit angeordnet. Die Druckfeder 12 ist in den Fig. 3 und 4 als Zylinderfeder dargestellt. Sie kann auch als Kegelfeder ausgeführt sein. Als Druckeinheit kann aber auch jedes andere Element eingesetzt werden, mit dem auf das Bauteil 11 ein ausreichender Druck ausgeübt werden kann. Das kann beispielsweise gemäß Fig. 5 auch ein anderes metallisches Element mit eingeprägtem Formgedächtnis sein.

Das Bauteil 11 erstreckt sich im wesentlichen quer zur Bewegungsrichtung des Stößels 5 des Ventils 2. Es kann mit Vorteil als rechteckiger Streifen ausgebildet sein, vergleichbar mit einer Blattfeder. Das Bauteil 11 benötigt somit - bis auf.einen für seine noch zu schildernde Bewegung benötigten Raum - innerhalb des Einsatzes 10 nur wenig Platz, so daß es zur Bauhöhe der gesamten Anordnung nur wenig beiträgt. Am Bauteil 11 ist gemäß den Fig. 3 bis 5 ein durch dasselbe in seiner Achsrichtung verstellbarer Arbeitskolben 13 angebracht. Auf der gegenüberliegenden Seite des Bauteils 11 befindet sich ein als Heizelement dienender elektrischer Widerstand 14, vorzugsweise ein PTC-Widerstand, der über eine Zuleitung 15 an eine Strom- bzw. Spannungsquelle anschließbar ist. Zwischen dem Bauteil 11 und dem Widerstand 14 kann beis pielsweise eine aus der DE 102 20 682 A1 bekannte, wärmeleitende Zwischenlage 16 aus Isoliermaterial angebracht sein.

Zum Einsatz 10 gehört auch ein Grundkörper 17 zum Aufsetzen des Gehäuses 9 auf das Ventil 2, in dem der Arbeitskolben 13 geführt ist und auf dem das Bauteil 11 abgestützt ist. Es liegt im dargestellten Ausführungsbeispiel mit seinen Enden auf zwei Gleitstücken 18 und 19 aus Kunststoff auf, die am Grundkörper 17 anliegen und auf demselben gleiten können. Die Druckfeder 12 liegt einerseits am Einsatz 10 selbst und andererseits an einem Federteller 20 an, der im Einsatz 10 in Richtung der Achse der Druckfeder 12 verschiebbar geführt ist und selbst am Bauteil 11 anliegt. Der Federteller 20 besteht aus einem mechanisch stabilen Kunststoff, wie beispielsweise Polyphenylsulfon. Der Widerstand 14 ist insbesondere feuchtigkeitsdicht im Federteller 20 integriert.

Die Anordnung nach der Erfindung in der Ausführungsform der Fig. 3 und 4 arbeitet beispielsweise wie folgt:

Die Anordnung mit Gehäuse 9 und Inhalt ist auf ein Ventil 2 aufgesetzt, welches bei der Position der Anordnung nach Fig. 3 geschlossen ist. Dabei ist das Bauteil 11 von der Druckfeder 12 mittels des Federtellers 20 nach unten gedrückt worden. Das Bauteil 11 hat dabei den Arbeitskolben 13 mitgenommen, durch welchen der Stößel 5 des Ventils 2(Fig. 2) in Schließstellung gebracht worden ist. Die Federkraft der Druckfeder 12 muß also größer als die Federkraft der Rückstellfeder des Ventils 2 zuzüglich der Kraft sein, die zur Verformung des Bauteils 11 erforderlich ist. Der Widerstand 14 erzeugt in dieser Position keine Wärme.

Zum Öffnen des Ventils 2 wird der Widerstand 14 an eine Strom- bzw. Spannungsquelle angeschlossen und dadurch erwärmt. Durch die vom Widerstand 14 abgegebene Wärme wird das Bauteil 11 erwärmt, das daraufhin in seine aus Fig. 4 ersichtliche eingeprägte Gedächtnisform zurückgeht. Es entwickelt dabei eine ausreichende Kraft, um die Federkraft der Druckfeder 12 zu überwinden und diese zusammenzudrücken. Unterstützt wird die Bewegung des Bauteils 1 1 durch die in der gleichen Richtung wirkende Rückstellfeder des Ventils 2, dessen Stößel 5 gegen den Arbeitskolben 13 drückt. Wenn das Ventil 2 wieder geschlossen werden soll, braucht nur die Stromzufuhr an den Widerstand 14 abgebrochen zu werden. Die Druckfeder 12 drückt das Bauteil 11 einschließlich Arbeitskolben 13 dann in seine aus Fig. 3 ersichtliche Lage zurück.

Die gleiche Arbeitsweise wie für die Anordnung nach den Fig. 3 und 4 gilt für die Anordnung nach Fig. 5, bei welcher die Druckfeder 12 durch ein metallisches Element 21 als Druckeinheit ersetzt ist, das ebenso wie das Bauteil 11 ein eingeprägtes Formgedächtnis hat. Fig. 5 zeigt die Anordnung bei geöffnetem Ventil 2, analog zu Fig. 4. Wenn die Erwärmung des Bauteils 11 abgeschattet wird, dann drückt bei dieser Ausführungsform der Anordnung das Element 21 das Bauteil 11 mit dem Arbeitskolben 13 in die Schließstellung des Ventils 2. Die Komponenten der Legierung des Elements 21 sind dabei so eingestellt, daß dasselbe bereits bei einer gegenüber dem Bauteil 11 wesentlich niedrigen Temperatur in seine dem eingeprägten Formgedächtnis entsprechende gebogene Form zurückgeht.

Wie schon erwähnt, erstreckt sich das Bauteil 11 im wesentlichen quer zur Bewegungsrichtung des Stößels 5 des Ventils 2. Es kann in diesem Sinne neben der beschriebenen rechteckigen Streifenform auch jede andere sinnvolle geometrische Gestalt haben. Der Stößel 5 des Ventils 2 bra ucht zwischen dessen Schließstellung nach Fig. 3 und seiner Offenstellung nach Fig. 4 nur um eine kurze Strecke von maximal 4 mm bewegt zu werden. Dieser Hubweg kann durch das Bauteil 11 grundsätzlich direkt überbrückt werden. Wenn dasselbe zwischen seinen beiden Endstellungen aber einen geringeren Weg zurücklegen soll, dann können an sich bekannte mechanische Übersetzungen zur Wegverlängerung zwischen Bauteil 11 und Federteller 20 angeordnet werden.

## Patentansprüche

1. Anordnung zum Verstellen eines Ventils und ein Ventil, das einen unter der Wirkung einer Rückstellfeder stehenden Stößel (5) aufweist, bei welcher in einem am Ventil (2) anzubringenden Gehäuse (9) ein temperaturabhängiges, mit einem in seiner Achsrichtung verstellbaren Arbeitskolben (13) zusammenwirkendes Stellelement angeordnet ist, das sich im wesentlichen quer zur Bewegungsrichtung des Arbeitskolbens erstreckt, bei welcher in Montageposition des Gehäuses (9) der Arbeitskolben (13) an der Stirnseite des Stößel (5) des Ventils anliegt, bei welcher das Stellelement ein aus einer Legierung mit eingeprägtem Formgedächtnis bestehendes metallisches Bauteil (11) ist, das sich im wesentlichen quer zur Bewegungsrichtung des Arbeitskolbens (13) erstreckt, bei welcher das metallische Bauteil (11) bei Erwärmung in einer ersten Endstellung eine dem eingeprägten Formgedächtnis entsprechende Form einnimmt, bei welcher in dem Gehäuse (9) eine auf das metallische Bauteil (11) einwirkende Druckeinheit angebracht ist, durch welche dasselbe bei Fortfall der Erwärmung in einer zweiten Endstellung gehalten ist, bei welcher das Stellelement einschließlich Arbeitskolben (13) in dessen Bewegungsrichtung zwischen den zwei Endstellungen verstellbar ist, welche der Offenstellung des Ventils (2) einerseits und dessen Schließstellung andererseits entsprechen, und bei welcher zwischen dem Stellelement und der Druckeinheit ein Federteller (20) aus mechanisch stabilem Kunststoff angeordnet ist, in welchem auf der dem Stellelement zugewandten Seite ein elektrisches Heizelement (14) integriert ist.

2. Anordnung und Ventil nach Anspruch 1, **dadurch gekennzeichnet, daß** das Heizelement (14) feuchtigkeitsdicht im Federteller (20) angebracht ist.

3. Anordnung und Ventil nach Anspruch 1 oder 2, **dadurch gekennzeichnet, daß** die Druckeinheit eine Zylinderfeder (12) bzw. eine Kegelfeder ist.

4. Anordnung und Ventil nach Anspruch 1 oder 2, **dadurch gekennzeichnet, daß** die Druckeinheit ein aus einer Legierung bestehendes metallisches Element (21) mit eingeprägtem Formgedächtnis ist, das gegenüber dem Stellelement bei niedrigeren Temperaturen reagiert.

## Claims

1. An arrangement for adjusting a valve and a valve having a tappet (5) which is under the effect of a restoring spring, comprising a ho using (9) to be attached to the valve (2), a temperature-dependentactuating element disposed therein, cooperating with an axially adjustable working piston (13) and extending essentially transversely to the motional direction of the working piston, the working piston (13) bearing against an end face of the tappet (5) of the valve, wherein the actuating element is a metallic structural part (11) of an alloy with impressed shape memory and extending essentially transversely to the motional direction of the working piston (13), in which the metallic structural part (11), when heated in a first end position, assumes a shape corresponding to the impressed shape memory, in which in the housing (9) there is fitted a pressure unit, which acts upon the metallic structural part (11) and by which the same is held in a second end position when the heating stops, in which the actuating element, inclusive of the working piston (13), is adjustable in its motional direction between the two end positions corresponding to an open position of the valve (2), on the one hand, and a closed position of the valve, on the otherhand, and in which between the actuating element and the pressure unit there is disposed a spring plate (20) made of mechanically stable p la stic , in which, o n the side facing the actuating element, an electric heating element (14) is integrated.

2. The arrangement and valve according to claim 1, **characterized in that** the heating element (14) is fitted in a moisture-tight manner in the spring plate (20).

3. The arrangement and valve according to claim 1 or 2, **characterized in that** the pressure unit is a cylindric al spring (12) or a conical spring.

4. The arrangement and valve according to claim 1 or 2, **characterized in that** the pressure unit is a metallic element (21) with impressed shape memory, which reacts at lower temperatures in comparison to the actuating element.

## Revendications

1. Ensemble pour ajuster une valve, et une valve, qui présente un poussoir (5) soumis à l'action d'un ressort de rappel, dans lequel un organe de réglage dépendant de la température et coopérant avec un piston de travail (13) déplaçable dans sa direction axiale est disposé dans un boisseau (9) à installer sur la valve (2), organe qui s'étend pour l'essentiel transversalement à la direction de mouvement du piston de travail (13), dans lequel le piston de travail (13) s'applique, dans la position de montage du boisseau (9), sur la face frontale du poussoir (5) de la valve, dans lequel l'organe de réglage est un composant métallique (11) constitué d'un alliage présentant une mémoire de forme marquée, qui s'étend pour l'essentiel transversalement à la direction de mouvement du piston de travail (13), dans lequel le composant métallique (11) prend une forme correspondant à la mémoire de forme marquée lors du chauffage dans une première position terminale, dans lequel une unité de pression agissant sur le composant métallique (11) est installée dans le boisseau (9), au moyen de laquelle ce dernier est maintenu dans une deuxième position terminale en cas du disparition du chauffage, dans lequel l'organe de réglage y compris le piston de travail (13) est déplaçable dans sa direction de mouvement entre les deux positions terminales, qui correspondent d'une part à la position ouverte de la valve (2) et d'autre part à sa position fermée, et dans lequel une rondelle élastique (20) en matière plastique mécaniquement stable est disposée entre l'organe de réglage et l'unité de pression et présente un élément chauffant électrique (14) intégré sur le côté tourné vers l'organe de réglage.

2. Ensemble et valve selon la revendication 1, **caractérisé en ce que** l'élément chauffant (14) est installé dans la rondelle élastique (20) de façon étanche à l'humidité.

3. Ensemble et valve selon la revendication 1 ou 2, **caractérisé en ce que** l'unité de pression est un ressort cylindrique (12) ou un ressort conique.

4. Ensemble et valve selon la revendication 1 ou 2, **caractérisé en ce que** l'unité de pression est un élément métallique (21) constitué d'un alliage avec une mémoire de forme marquée, qui réagit par rapport à l'organe de réglage à des températures plus basses.
